# EUROPEAN PATENT APPLICATION

(11) **EP 0 887 146 A2**
(43) Date of publication of application: **30.12.1998**
(21) Application number: 98301283.2
(22) Date of filing: 20.02.1998
(51) Int. Cl.: B23P 19/00, B65G 47/14

(54) **Apparatus for dispensing balls**

(30) Priority: 26.06.1997 KR 9727515; 26.06.1997 KR 9727521; 26.06.1997 KR 9727522; 26.06.1997 KR 9727523; 30.06.1997 KR 9728876
(71) Applicant: Samsung Electronics Co., Ltd., Suwon City, Kyungki-do (KR)
(72) Inventor: Lee, Geum-chan, Suwon-city, Kyungki-do (KR); Lee, Hyun-moo, Suwon-city, Kyungki-do (KR); Jang, Sam-yong, Suwon-city, Kyungki-do (KR)
(74) Representative: Geary, Stuart Lloyd

(57) **Abstract**

An apparatus for dispensing balls (15) into a device for dynamically compensating for imbalanced rotation of a drum of a washing machine is disclosed and includes a hopper (35) for storing a supply of balls (15) ready to be dispensed, a chute (37) through which balls (15) are dispensed from the hopper (35) into the device, and control means (40) for terminating the passage of balls (15) through the chute (37) after a preselected number have been dispensed.

## Description

The present invention relates to an apparatus for dispensing balls into a channel.

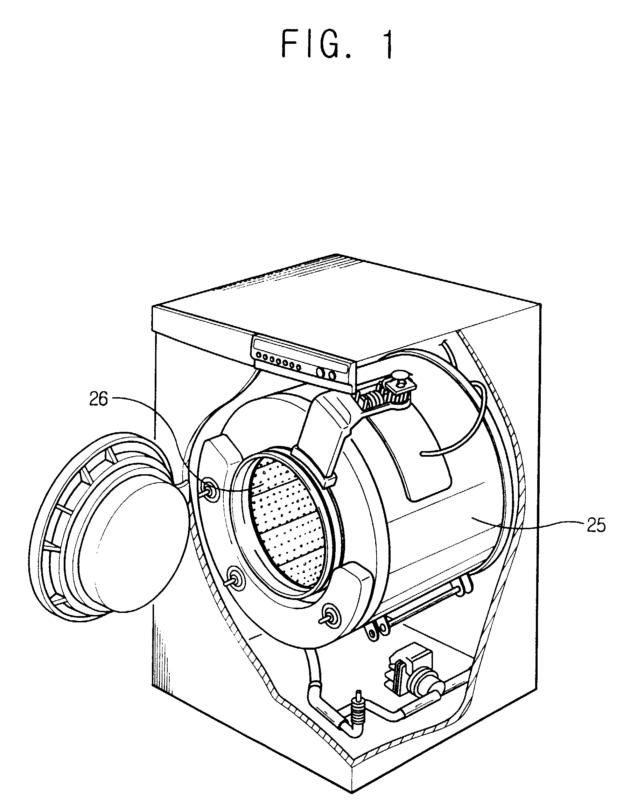

A conventional drum type washing machine is illustrated in Figure 1 and includes a drum 26 for receiving laundry to be washed, rotatably mounted within a tub 25.

The drum 26 rotates at a low speed during a washing cycle and at a higher speed during a spin-drying cycle. When the drum 26 rotates at a high speed, vibration occurs due to the uneven distribution of laundry within the drum 26. The washing machine is therefore provided with a device to counterbalance the uneven load and reduce vibration of the drum 26 and tub 25.

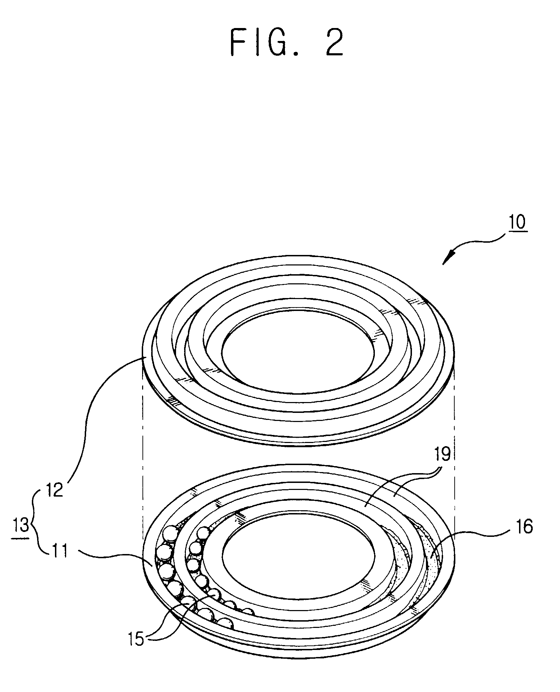

A typical counterbalancing device is a ball balancer of the type illustrated in Figure 2.

A balancer 10 generally includes a housing 13 comprising a lower portion 11 provided with annular races 19 around its circumference and an upper cover 12 which fits onto and covers the lower portion 11. The races 19 accommodate a plurality of counterbalancing balls 15 which are free to move along the races 19 during rotation of the drum 26 to a position in which the uneven distribution of laundry within the drum 26 is counterbalanced by the weight of the balls 15 and vibration of the drum 26 and tub 25 is damped.

To ensure that the balls 15 move smoothly within the races 19 and quickly counteract any imbalance, the races 19 are partially filled with oil or other lubricant.

A disadvantage with the type of counterbalancing device described above is that it is time consuming and difficult to manufacture as the counterbalancing balls 15 must be placed in the races 19 manually. This increases overall costs and lowers productivity.

It is an object of the present invention to overcome or substantially alleviate the aforementioned problem.

An apparatus for dispensing balls according to the present invention is characterised by a hopper for storing balls, a chute through which balls are dispensed from the hopper into the channel, and control means for terminating the passage of balls through the chute after a predetermined number have been dispensed.

Preferably, the control means is mounted on the chute and includes a member movable to block the chute thereby terminating the passage of balls.

The control means is preferably operable to move the member to block the chute in response to a signal generated by a sensor after the predetermined number of balls have been dispensed.

In a preferred embodiment, the apparatus includes a jig for locating the channel for reception of said balls from the chute.

In another embodiment, the jig is conveniently mounted on a carriage movable between a first position in which the element in which the channel is formed can be loaded on and unloaded from the jig and a second position in which balls leaving the chute enter the channel.

Preferably, the hopper is in communication with an auxiliary container for storing additional balls and the passage of counterbalance means from the auxiliary container into the hopper is controlled by movable closure means.

Embodiments of the invention will now be described, by way of example only, with reference to the accompanying drawings, in which:-
Figure 1 is a perspective view of a conventional drum type washing machine;
Figure 2 is an exploded perspective view of a counterbalancing device for damping vibration caused by the uneven distribution of laundry within a washing machine;
Figure 3 is a perspective view of an apparatus for feeding balls into the counterbalancing device illustrated in Figure 2 according to a first embodiment of the present invention;
Figures 4 and 5 are enlarged side sectional views showing the operation of a device for controlling the apparatus illustrated in Figure 3;
Figure 6 is a second embodiment of the present invention;
Figures 7 and 8 are side sectional views showing the operation of a transfer device shown in Figure 6;
Figure 9 is a third embodiment of the present invention;
Figures 10 and 11 are partial enlarged transverse sectional views showing the operation of the opening/closing device shown in Figure 9;
Figure 12 is a fourth embodiment of the present invention;
Figures 13 and 14 are enlarged side sectional views of a speed reduction device shown in Figure 12; and
Figure 15 is another embodiment of the control device of the ball feeding apparatus according to the present invention.

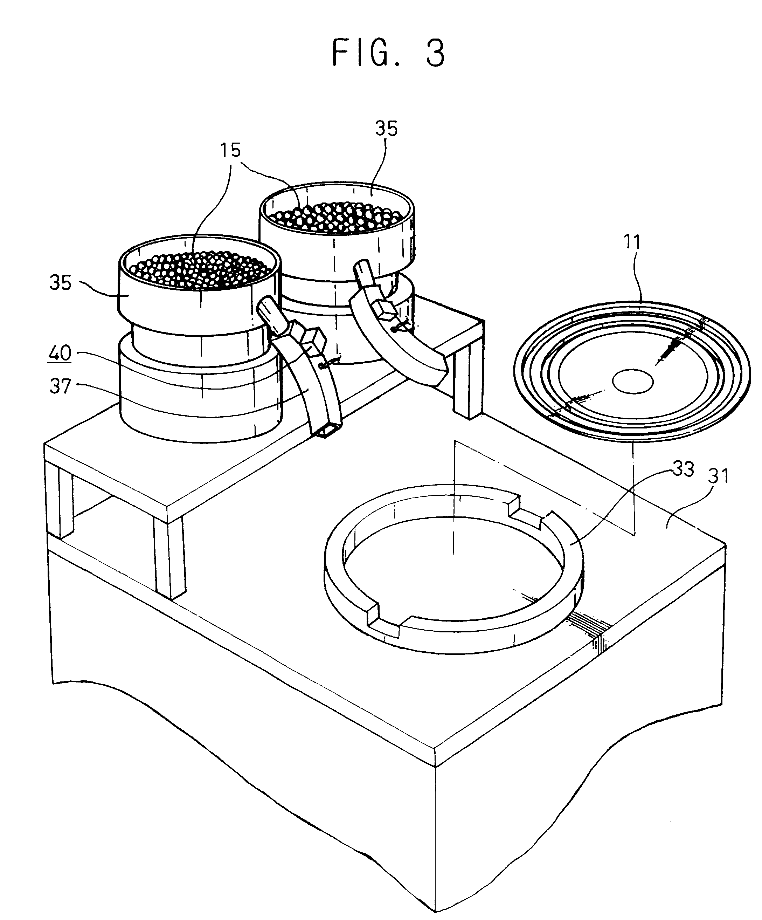

An apparatus for feeding balls into the counterbalancing device of a washing machine is illustrated in Figure 3 and comprises a jig 33 mounted on a table 31, a hopper 35 containing balls 15 for feeding into the races 19 of the lower portion 11 of a counterbalancing device, a chute 37 extending from the hopper 35, and a control device 40 for controlling the discharge of balls 15 from the hopper 35 into the lower portion 11 through the chute 37. The apparatus is equipped with a pair of hoppers 35, chutes 37 and control devices 40 to enable balls 15 to be simultaneously fed into both races 19 formed in the lower housing 11.

When the apparatus is to be used, the lower portion 11 of the counterbalancing device is mounted on the jig 33. Operation of the control devices 40 causes the required number of balls 15 to be discharged through the chute 37 into the races 19 in the lower portion 11 of the counterbalancing device.

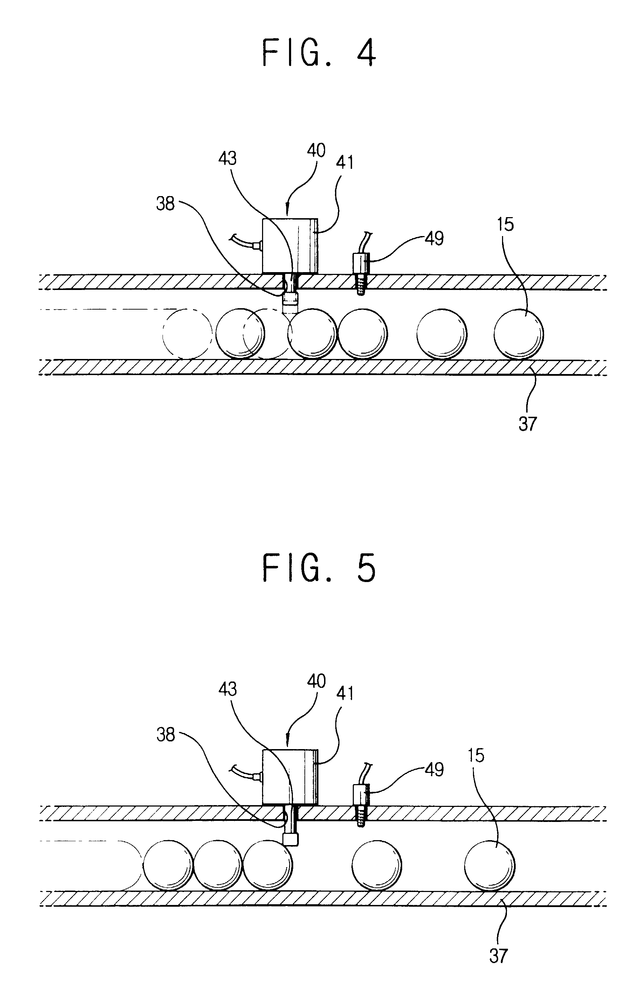

Operation of the control device will now be described with reference to the side sectional views of the chute 37 illustrated in Figures 4 and 5. The control device 40 includes a control cylinder 41 mounted on the chute 37 for controlling the movement of a piston 43 which extends into the chute 37 through a hole 38. The piston 43 prevents the discharge of balls 15 by blocking the chute 37. Operation of the control cylinder 41 causes the piston 43 to be withdrawn from the chute 37 to allow balls 15 to be discharged.

A sensor 49 is mounted on the chute 37 adjacent to the control cylinder 41 and counts the number of balls 15 discharged through the chute 37 passed the piston 43.

When the apparatus is in operation, the control cylinder 41 withdraws the piston 43 to allow the discharge of balls 15 from the hopper 35 through the chute 37. The sensor 49 counts the number of balls 15 being discharged and when the preselected number has been reached, the control cylinder 41 moves the piston 43 to block the chute 37 and prevent further discharge of balls 15, as shown in Figure 5.

Once the required number of balls 15 are located in the races 19, the counterbalancing device is moved to the next process in which the cover 12 is welded in place.

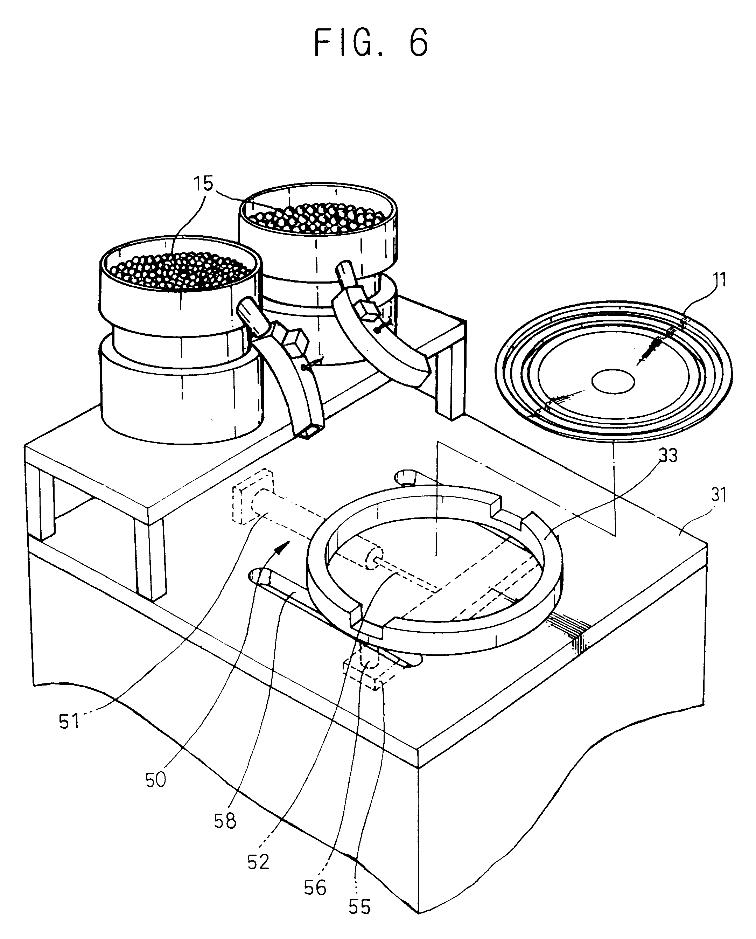

A second embodiment of the present invention is illustrated in Figure 6 from which it can be seen that the jig 33 is movably mounted to enable the lower portion 11 of the counterbalancing device to be mounted on the jig 33 which is then driven into the correct position for the discharge of balls 15 from the hopper 35 into the races 19 and then moved back to its original loading position once the discharge of balls 15 has been completed.

As can be seen more clearly from Figures 4 and 5, the transfer device 50 comprises a support member 55 having support bars 56 connected to the jig 33, and a transfer cylinder 51 having a piston 52 connected to the support bars 55. The table 31 on which the jig 33 is mounted is provided with a pair of elongated apertures 58 through which the support bars pass and along which they can move during transfer of the jig 33 between the loading and discharge positions. Operation of the transfer cylinder 51 causes the piston 52 to move the support member 55, the support bars 56 and the jig 33. Movement of the support bars 56 is guided by the elongated apertures 58 in the table 31.

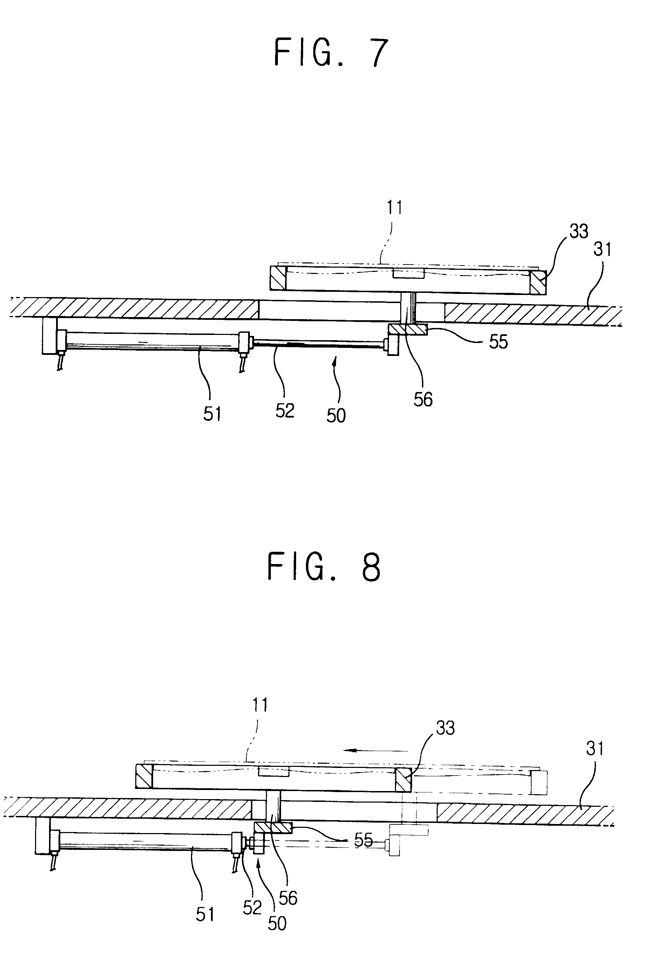

When the apparatus is in operation, the jig 33 is transferred to the frontal area of the ball feeding apparatus by the transfer device 50 as shown in Figure 7. The lower portion 11 of the counterbalancing device is then transferred from the previous processing line onto the jig 33. The jig 33 is now transferred to the ball discharge position, as shown in Figure 8 and the balls 15 can now be discharged from the hopper 35 through the chute 37 into the races 19. When the discharge of balls 15 is complete, the jig 33 is returned to its original loading position, as shown in Figure 7, and the lower portion 11 of the counterbalancing device can easily be removed from the jig 33 and transported to the next processing step. The second embodiment of the present invention enables the lower portion 11 of the counterbalancing device to be easily loaded onto and removed from the jig 33.

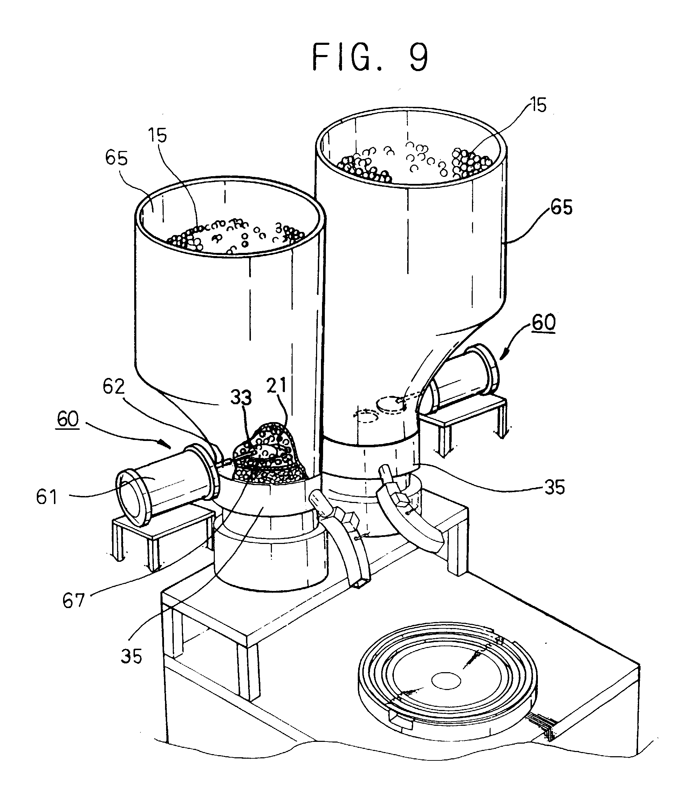

A third embodiment of the present invention is illustrated in Figure 9. In this embodiment, the ball feeding apparatus is provided with an auxiliary feeding device 60 for feeding balls into the hopper 35.

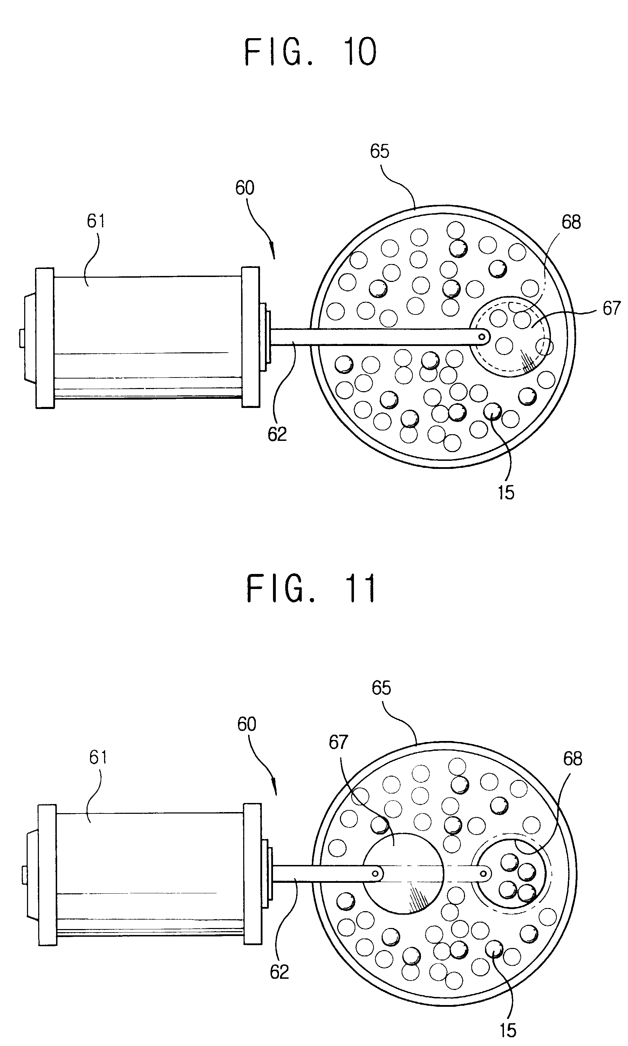

The auxiliary feeding device 60 comprises an auxiliary container 65 mounted on the hopper 35 and a cylinder 61 mounted adjacent to the auxiliary container 65 which controls the movement of a piston 62 to open and close a passage 68 between the auxiliary container 65 and the hopper 35 to allow balls 15 to pass therethrough. The piston 62 passes through the auxiliary container 65 and has a plate 67 mounted on its end. The plate 67 is of the same size as the passage between the auxiliary container 65 and the hopper 35 and is movable in response to operation of the cylinder 61 to open and close the passage 68. The cylinder 61, piston 62 and plate 67 can be more clearly seen in Figure 10.

Whilst balls 15 are being discharged from the ball feeding apparatus, the passage 68 is closed by the plate 67. When the hopper 35 is empty, the cylinder 61 withdraws the piston 62 to move the plate 67 away from the passage 68, thereby allowing balls 15 to pass from the auxiliary container 65 into the hopper 35 through the passage 68.

The advantage with the present embodiment is that when the hopper 35 is empty, additional balls 15 are fed into the hopper 35 from the auxiliary container 65, and so the hopper 35 does not need to be filled manually.

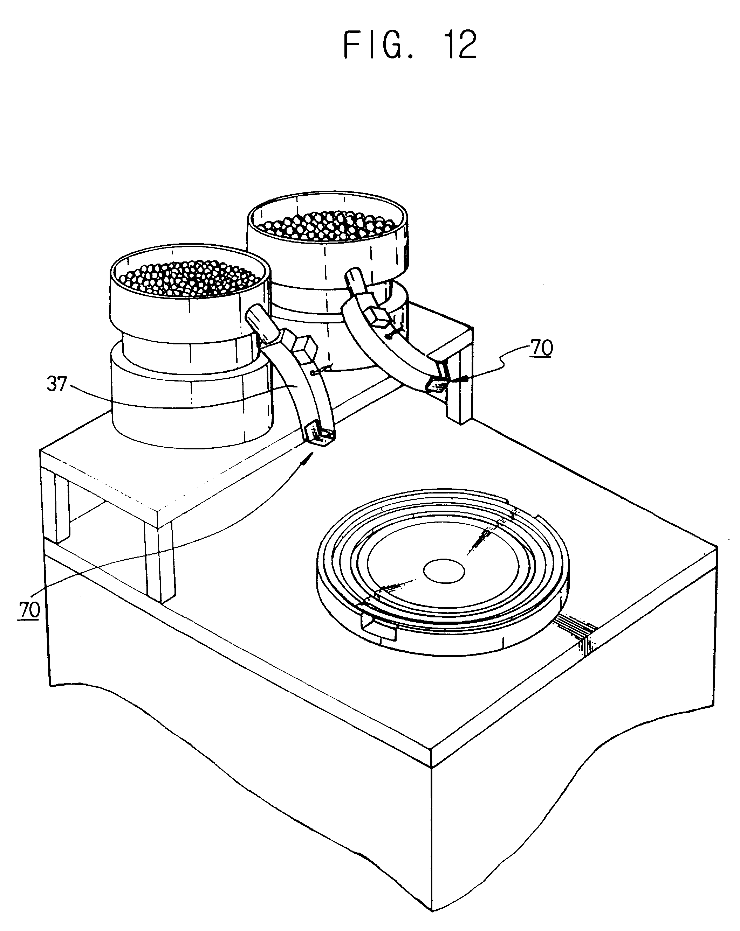

A fourth embodiment of the present invention is illustrated in Figures 12, 13 and 14. In this embodiment, the ball feeding apparatus has a speed reduction device 70 for reducing the speed of the balls 15 discharged from the chute 37.

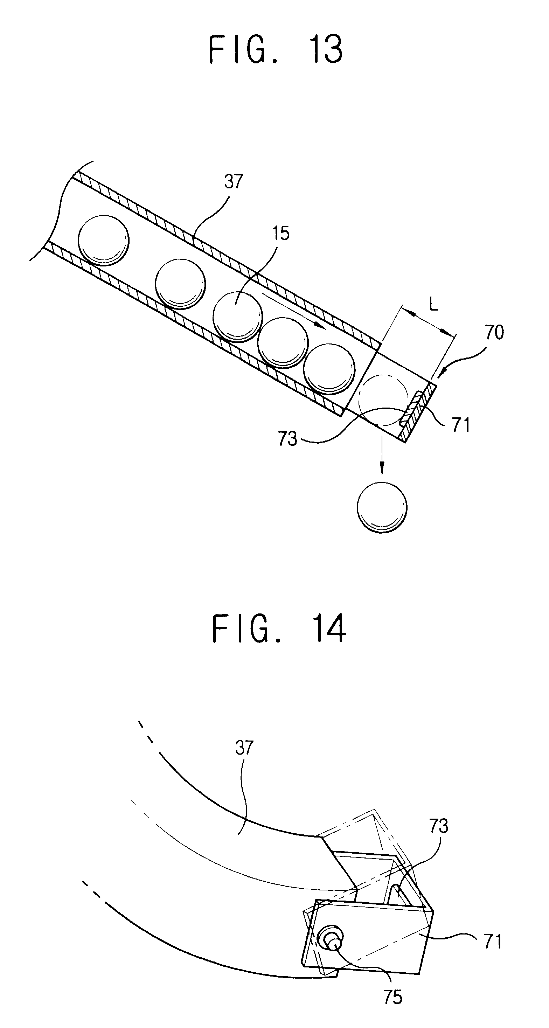

The speed reduction device 70 comprises a speed reduction member 71 pivotally mounted on the open end of the chute 37, and a buffering member 73 attached to an inner face of the speed reduction member 71 which the balls 15 strike as they exit the chute 37. The speed of the balls 15 discharged from the chute 37 is substantially reduced as a result of striking the buffering member 73. As the balls 15 strike the speed reduction member 71, it pivots as shown in Figure 14 with a dotted line and the balls 15 drop downwardly from the end of the chute 37 into the races 19 of the counterbalancing device.

As the speed of the balls 15 is reduced, they drop directly into the races 19. Furthermore, the noise generated when the balls 15 strike the speed reduction member 71 is reduced by the buffering member 73.

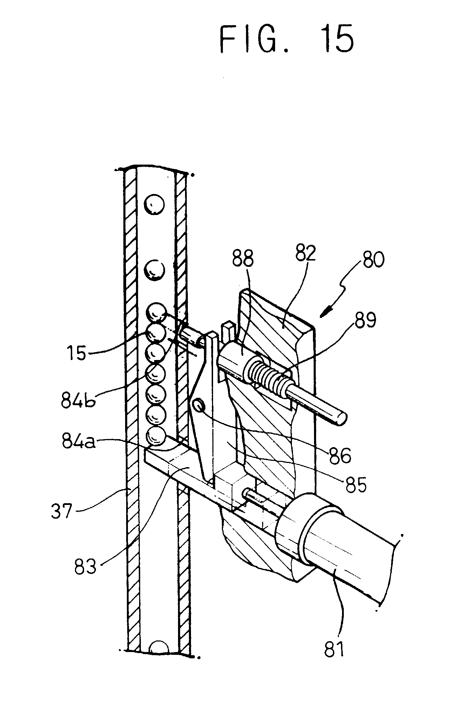

Another embodiment of the control device 80 of the ball feeding apparatus according to the present invention is illustrated in Figure 15 and comprises a control cylinder 81 mounted adjacent to the chute 37, a piston 83 controlled by the first cylinder 81 for preventing and allowing the passage of balls 15 through the chute 37 and a lever 85 mounted substantially parallel to the chute 37 and capable of pivoting about a hinge pin 86 in response to operation of the control cylinder 81 to control the movement of a piston 88 which is supported by a spring in a support member 82.

The chute 37 has a first hole 84a through which the piston 83 passes and a second hole 84b through which the auxiliary piston 88 passes. The piston 83 allows or prevents the passage of the balls 15 through the chute 37 according to the control of the cylinder 81.

When the control cylinder 81 is operated and the piston 83 is positioned within the chute 37, the passage of balls 15 through the chute 37 is prevented. The auxiliary piston 88 is withdrawn from the chute 37 under the control of the piston 83 via the lever 85 against the elastic force of the spring 89 and the balls 15 in the chute 37 rest against the piston 83 which blocks the chute 37.

When balls 15 are to be discharged, the piston is withdrawn from the first hole 84a by the cylinder 81, and simultaneously, the auxiliary piston 88 is inserted into the second hole 84b by the elastic force of the spring 89. This allows only the balls located in the chute 37 between the piston 83 and the auxiliary piston 88 to be discharged.

It will be appreciated that the number of balls 15 discharged during each operation of the cylinder 81 can be regulated by altering the distance between the piston 83 and the auxiliary piston 88. Therefore, the use of a sensor can be avoided.

Although the present invention has been described and illustrated in detail, it is clearly understood that the same is by way of illustration and example only and is not to be taken by way of limitation, wherein the scope of the present invention is limited only by the terms of the appended claims.

## Claims

1. An apparatus for dispensing balls (15) into a channel (11) **characterised by** a hopper (35) for storing balls (15), a chute (37) through which balls (15) are dispensed from the hopper (35) into the channel, and control means (40) for terminating the passage of balls (15) through the chute (37) after a predetermined number have been dispensed.

2. An apparatus according to claim 1, wherein the control means (40) includes a member (43) movable to block the chute (37) thereby terminating the passage of balls (15).

3. An apparatus according to claim 2, wherein the control means (40) is operable to move the member (43) to block the chute in response to a signal generated by a sensor (49) after the predetermined number of balls (15) have been dispensed.

4. An apparatus according to any preceding claim, comprising a jig(33) for locating the channel for reception of said balls (15) from the chute (37).

5. An apparatus according to claim 4, wherein the jig (33) is mounted on a movable carriage (50).

6. An apparatus according to claim 5 wherein the carriage (50) is movable between a first position at which the element in which the channel is formed can be loaded on and unloaded from the jig (33) and a second position at which balls leaving the chute enter the channel.

7. An apparatus according to claim 6 comprising a housing (31) and slots (58) in the housing (31) for guiding the carriage (50) between the first and second positions.

8. An apparatus according to any of claims 5 to 7 wherein movement of the carriage (50) is controlled by a pneumatic cylinder (52).

9. An apparatus according to any preceding claim, comprising an auxiliary container (65) in communication with the hopper (35) for storing additional balls (15).

10. An apparatus according to claim 9, wherein movable closure means (61,62,67) controls the passage of balls (15) from the auxiliary container (65) into the hopper (35).

11. An apparatus according to any preceding claim, including means (70) mounted on the chute (37) for reducing the velocity of balls (15) exiting the chute (37).

12. An apparatus according to claim 11, wherein said speed reduction means (70) is pivotably mounted on the chute (37).

13. An apparatus according to claim 11 or 12, wherein the speed reduction means (70) includes a buffer (73).

14. An apparatus according to claim 2, wherein the control means (40) includes a second member (88) situated between the hopper (35) and the first member (43,83) and movable into the chute (37) to block the chute (37) and terminate the passage of counterbalance balls (15), the second member (88) being movable to block the chute (37) in response to withdrawal of the first member (43,83) from the chute (37), to allow only balls (15) located in the chute (37) between the first and second members (43,83,88) to be dispensed.

15. An apparatus according to claim 14, wherein movement of the second member (88) is controlled by a lever (85) operated by movement of the first member (43,83).

16. An apparatus according to claim 15, wherein the second member (88) is withdrawn from the chute (37) by the lever (85) against a spring bias in response to movement of the first member (83) into the chute (37).

17. An apparatus for dispensing balls into two concentric circular channels, comprising two apparatuses, each apparatus being in accordance with any one of claims 1 to 3.

18. An apparatus for feeding balls into a balancer in a drum type washing machine, said balancer having a balancer housing comprised of a lower housing for forming an annular race and an upper cover for covering said lower housing, and a plurality of balls accommodated in said race, said balancer for damping vibrations of a dehydration tub, said apparatus comprising a jig on which said lower housing is loaded, a container for containing said balls to be fed into said lower housing, a chute being installed at said container, said chute for feeding said balls in said container into said lower housing and a means for controlling feeding of said balls which are fed into said lower housing through said chute.

19. The apparatus for feeding balls into a balancer as claimed in claim 18 wherein said controlling means comprises a control cylinder being installed at a side of said chute and a stopping member being controlled by said control cylinder, said stopping member for stopping movement of said balls in said chute.

20. The apparatus for feeding balls into a balancer as claimed in claim 18 wherein said controlling means further comprises a means for counting the number of said balls fed into said lower housing through said chute.

21. The apparatus for feeding balls into a balancer as claimed in claim 18 further comprising a means for transferring said jig.

22. The apparatus for feeding balls into a balancer as claimed in claim 21 wherein said transferring means comprises a support member for supporting said jig and a transfer cylinder for transferring said support member.

23. The apparatus for feeding balls into a balancer as claimed in claim 18 further comprising an auxiliary feeding means for feeding said balls into said container when said container is empty of said balls.

24. The apparatus for feeding balls into a balancer as claimed in claim 23 wherein said auxiliary feeding means comprises an auxiliary container for containing said balls to be fed into said container, said auxiliary container being formed with a communication hole for communicating with said container, and a means for opening/closing said communication hole so as to control feeding of said ball from said auxiliary container to said container.

25. The apparatus for feeding balls into a balancer as claimed in claim 24 wherein said opening/closing means comprises a plate for opening/closing said communication hole and an opening/closing cylinder for moving said plate so as to control opening/closing operation of said plate.

26. The apparatus for feeding balls into a balancer as claimed in claim 18 further comprising a means for reducing speed of said balls discharged from said chute.

27. The apparatus for feeding balls into a balancer as claimed in claim 26 wherein said speed reducing means comprises a speed reduction member being installed at an end of a discharge port of said chute, said speed reduction member to which said balls discharged from said chute is struck, whereby the speed of said balls is reduced.

28. The apparatus for feeding balls into a balancer as claimed in claim 27 further comprising a buffering member being attached on said speed reduction member, said buffering member for buffering impact of said balls that strike said speed reduction member.

29. The apparatus for feeding balls into a balancer as claimed in claim 19 wherein said controlling means further comprises a lever being installed at an area of said chute to be capable of pivoting, said lever pivoting according to operation of said control cylinder, and an auxiliary stopping member pivoting according to the pivoting of said lever, said auxiliary stopping member for stopping movement of said balls in said chute when said stopping member allows the movement of said balls in said chute, whereby said balls placed between a stop position by said stopping member and a stop position by said auxiliary stopping member are fed into said lower housing
